# EUROPEAN PATENT SPECIFICATION

(11) **EP 2 393 875 B1**
(45) Date of publication and mention of the grant of the patent: **17.07.2013**
(21) Application number: 08793971.6
(22) Date of filing: 01.09.2008
(51) Int. Cl.: C08J 11/10, C08J 11/16, C10G 1/10, B01J 19/18, B01J 19/32

(54) **THE METHOD OF THERMOCATALYTIC DEPOLYMERIZATION OF WASTE PLASTICS, A SYSTEM FOR THERMOCATALYTIC DEPOLYMERIZATION OF WASTE PLASTICS AND A REACTOR FOR THERMOCATALYTIC DEPOLYMERIZATION OF WASTE PLASTICS**
VERFAHREN ZUR THERMOKATALYTISCHEN DEPOLYMERISATION VON KUNSTSTOFFABFÄLLEN, SYSTEM ZUR THERMOKATALYTISCHEN DEPOLYMERISATION VON KUNSTSTOFFABFÄLLEN UND REAKTOR ZUR THERMOKATALYTISCHEN DEPOLYMERISATION VON KUNSTSTOFFABFÄLLEN
PROCÉDÉ DE DÉPOLYMÉRISATION THERMOCATALYTIQUE DE DÉCHETS DE MATIÈRE PLASTIQUE, SYSTÈME POUR LA DÉPOLYMÉRISATION THERMOCATALYTIQUE DE DÉCHETS DE MATIÈRE PLASTIQUE ET RÉACTEUR POUR LA DÉPOLYMÉRISATION THERMOCATALYTIQUE DE DÉCHETS DE MATIÈRE PLASTIQUE

(43) Date of publication of application: 14.12.2011
(73) Proprietor: Novak, Kornel, 1822 Chernex (CH); Wójcik, Marek, 1822 Chernex (CH)
(72) Inventor: HANDEREK, Adam, PL-43-300 Bielsko-Biala (PL)
(74) Representative: Passowicz, Marek
(86) International application number: PCT/PL2008/000061
(87) International publication number: WO 2010/024700

(56) References cited:
- EP-A- 1 726 634
- WO-A-00/64998
- WO-A-01/40711
- JP-A- 59 174 690
- JP-A- 2005 330 437
- US-A- 3 956 414
- US-A- 4 584 421
- DATABASE COMPENDEX [Online] ENGINEERING INFORMATION, INC., NEW YORK, NY, US; ANONYMOUS: "New plant for synthetic resin manufacture and similar high-temperature processes" XP002513747 Database accession no. EIX19330014546 & INDUS CHEMIST; INDUSTRIAL CHEMIST JULY-AUG 1933, vol. 9, no. 102-103, July 1933 (1933-07), page Various pages,

## Description

The invention relates to a method of thermocatalytic depolymerization of waste plastics, a system for thermocatalytic depolymerization of waste plastics and a reactor for thermocatalytic depolymerization of waste plastics. The method, system and reactor are particularly suitable for depolymerization of polyolefins and polystyrene.

A system is known from the Polish Patent Specification PL 188936 for transforming polyolefin waste into liquid hydrocarbons. The system has a reactor, in the form of a vertical storage silo, provided with a feed hopper connected to a device for dosing polyolefin raw material and a catalyst, an exhaust pipe for waste gas, a connector pipe for collecting the product, a mixer and a screen, as well as a heating system in the form of a combustion chamber surrounding the reactor silo from the bottom. The combustion chamber is heated with at least one burner supplied with reaction products. The reactor has a heating system in the form of a combustion chamber surrounding it from the bottom, heated, in a favourable embodiment, with at least one burner supplied with reaction products, whereby in the combustion chamber, symmetrically along the perimeter of the reactor, in a favourable embodiment in several rows, there are pass-through heating pipes, which pass through the interior of the reactor above the top edge of the mixer, and further through the screen to the exhaust chamber for waste gas. The system furthermore contains a product condenser, a buffer tank for raw material and a distillation column. The buffer tank has a level sensor, which is integrated with an automatic control system for the device which dispenses raw material into the reactor.

Finely divided polyolefin material, along with a catalyst of the group comprising cements, heavy metal silicates and heavy metal resinates, are fed into the reactor, where they are gradually heated to the maximum temperature of 600°C. Reaction products discharged through the pipe for collecting the product from the reactor are steered to the condenser, where they are cooled and condensed, and then steered to the buffer tank, heated to 40°C. From the buffer tank the crude product is steered to the distillation column, where it is separated into fractions of different boiling temperatures. The product thus obtained may serve as a raw material for producing petrol, gas oil or eco heating oil.

A reactor unit is known from the Polish Patent Application P-352344 for continuous thermocatalytic transformation of waste plastics, in particular polyolefin plastics, equipped with a heating unit with a combustion chamber with at least one burner and a thermocatalytic reactor with a catalyst. The combustion chamber is made of refractory ceramics, has a burner inside, which bums the gas used for sawdust gasification and is placed in a casing made of pearlite brick and mineral wool and is protected with steel sheet on the outside. In the top part of this casing there is an intermediate heating chamber equipped with heating partitions made of cast iron grid resting on chamotte supports. Above the intermediate heating chamber there is a double-sloping bottom of the catalytic reactor. The catalytic reactor has the form of a horizontal vessel of a channel cross section with the web facing upwards, and has an upper chamber and two side chambers. The upper chamber houses a cooler channel which further turns into a channel discharging the volatile fractions into the cooler. The cooler channel has an escapement for condensed gases. The lower part of the reactor vessel is a tank with double-sloping bottom.

A method is known from the Polish Patent Application P-3 56491 for continuous processing of olefin plastic waste into a mixture of unsaturated and saturated hydrocarbons, in which the charge is portioned, put in the processing line in a continuous fashion under pressure, plasticized in a melting crucible, pressed into an exchanger, liquefied, transformed catalytically with a catalyst distributed evenly in the reaction material, discharged in gaseous form into a cooler and then condensed. The plasticized charge is melted in the exchanger and then moved gravitation-wise into a stabilizer.

A method is known from the Polish Patent Application P-358774 for continuous processing of polyolefin plastic waste into a mixture of unsaturated and saturated hydrocarbons, which form a high quality paraffin, in which the charge is fed continuously, plasticized in a melting crucible, liquefied and transformed thermocatalytically, whereby the whole process from charging to collecting gaseous product and removing pollution is pursued in one stage in one inner vessel of an integrated vertical melter-exchanger-reactor device, and a homogeneous block of charge material is made from the plasticized and liquefied charge, which falls gravitation-wise. A characteristic feature of the device used for processing as per this method is that it is a modular integrated vertical melter-exchanger-reactor device in which the whole process is pursued in one stage, from charging to removing pollution, in one inner vessel. The charge is fed through a feed hopper, the gaseous product is collected through a channel in the vessel bottom and pollution accumulates in a tank located outside the vessel.

A device is known from the Polish Patent Application P-372777 for thermal depolymerization of waste plastics in the form of a reactor equipped with turbine mixers and bundles of heating pipes which are distributed alternately in a long, narrow and flat case and are constantly below the surface of melted plastic supplied to the device through a collecting pipe. Heating pipes are supplied with a liquid with the temperature of 500°C, in a favourable embodiment fusible metal, e.g. Wood's alloy. Among mixers and bundles of heating pipes there are vertical partitions which do not touch the sides of the reactor, and ensure longitudinal flow of the liquid in the heater. A multisegment vapour condenser is coupled with the reactor and is equipped with vertical pipe exchangers grouped in sections equipped with individual fan coolers. Each section has a different liquid as a cooling agent, with the temperature ensuring condensation of the selected fraction.

The method of thermal depolymerization of waste plastics consists in selective condensation of some fractions with high boiling temperatures from depolymerization product vapours, and this liquid is mixed with new portions of plastics in proportions and at temperatures which ensure they will not undergo depolymerization and will not harden when cooled to ambient temperature; further on they are placed again in the reactor and depolymerized in a layer as thin as possible, in sections of heating pipes supplied with a liquid with the temperature of up to 500°C, in a favourable embodiment with a fusible material, especially Wood's alloy.

The efficiency of the processes known to date usually amounts to approx. 60% of the merchandise compared to charge.

It is an object of the invention relating to the thermocatalytic depolymerization of waste plastics, in particular polyolefin plastics, to a mixture of unsaturated and saturated hydrocarbons, in which finely divided raw material is plasticized in a melting crucible, liquefied by heating and transformed catalytically in a thermocatalytic reactor in the presence of a catalyst, and reaction products in gaseous form are discharged to a fraction condenser, where they are cooled, condensed and separated into fractions of different boiling temperatures to have, in the thermocatalytic reactor, the reaction mixture in liquid state stirred and separated into at least two layers, situated at different levels, whereby each of these layers is heated up irrespective of the other, using heating elements principally oriented crosswise with respect to the vertical axis of the reactor, in a favourable embodiment in the form of electric heaters placed in protective tubes grouped in bundles, in a favourable embodiment stabilized with inert gases, in a favourable embodiment CO₂ or metal oxides. In a favourable embodiment, the reaction mixture is stirred, separated and raised using a mixing pump, in a favourable embodiment a high performance positive-displacement propeller pump, whereby the mixture is fed into perforated dispensing trays or dispensing troughs, located above the mixture bottom layer surface, crosswise with respect to the vertical axis of the reactor. In a favourable embodiment, kinetic and thermal energy of the reaction mixture is supported by bubbling, using CO₂ or other inert gas, whereby, in a favourable embodiment, gas from the stabilizing circuit of electric heaters is used. In a favourable embodiment, products in gaseous form obtained from the catalytic reaction, before being fed into fraction condenser, are passed through a porous catalyst layer, in a favourable embodiment in the form of a granulated product, contained in a secondary depolymerization device. In a favourable embodiment, non-condensed postcondensation gases from the fraction condenser are fed into a power generator with a combustion engine and a current generator, whereby, in a favourable embodiment, generated electric power is used for electric heaters and other system devices. In a favourable embodiment, the catalyst is supplied into the thermocatalytic reactor in doses or continuously. In a favourable embodiment, the catalyst is supplied into the tank of the secondary depolymerization device in doses or continuously. In a favourable embodiment, the catalyst worn out in the process, along with the carbonization product generated in the reactor, is discharged from the reactor into the filter, in a favourable embodiment a ceramic filter, with oil recycling to thermocatalytic reactor.

The invention pertaining to the system for thermocatalytic depolymerization of waste plastics, in particular polyolefin plastics, featuring a raw material storage silo and feeder, a melting crucible, a heater and a thermocatalytic reactor equipped with heating elements, connected to a fraction condenser, is characterized by the fact that it has a secondary depolymerization device in which gaseous products of a catalytic reaction collected from thermocatalytic reactor are subject to depolymerization, whereby the device is connected to the reactor via a connector pipe supplying gaseous products and is connected to fraction condenser via a connector pipe collecting gaseous products. In a favourable embodiment, the secondary depolymerization device has the form of a vertical pass-through tank filled with porous layer of the catalyst, in a favourable embodiment in the form of granulated product. The secondary depolymerization device has a catalyst feeder and a device discharging worn-out catalyst. The thermocatalytic reactor has a device for separating liquid reaction material into layers situated one above the other in the form of a mixing pump, horizontal dispensing trays or dispensing troughs located above the reaction mixture surface and heating elements assigned to these layers. In a favourable embodiment, the heating elements of thermocatalytic reactor are electric heaters placed in tubes, grouped in bundles and mounted separately in openings along the perimeter of the body, oriented centripetally and located at two levels, the lower level near the bottom of the reactor and the upper level, above or below perforated dispensing trays or dispensing troughs located above the liquid reaction mixture surface, crosswise with respect to the vertical axis of the body. Electric heaters are heating elements placed in protective tubes, stabilized with carbon dioxide CO₂ or other inert gas. In a favourable embodiment, the reactor has sparge pipes installed inside, supplying CO₂ or other inert gas collected from electric heaters pipes to the reaction mixture producing the effect of bubbling and additional heating of the mixture. In a favourable embodiment, the thermocatalytic reactor has a catalyst dispenser equipped with a feeder and, in the bottom section, a device for discharging worn-out catalyst along with the carbonization product, with oil recycling to the reactor, whereby, in a favourable embodiment, the device has a gear pump and a ceramic filter. In a favourable embodiment, the fraction condenser is connected, via a pipe discharging non-condensed postcondensation gases, to the power generator unit equipped with a combustion engine and a current generator.

The invention pertaining to the reactor for thermocatalytic depolymerization of waste plastics featuring a body in the form of a closed vessel, with thermal insulation, within which heating elements in the form of tubes and a mixer are mounted, is characterized by the fact that it has at least one upper level for dispensing the reaction mixture, located above the reaction mixture surface contained at the bottom of the body, which level has the form of perforated dispensing trays or dispensing troughs located crosswise with respect to the vertical axis of the body, whereby the reaction mixture at each level has separate heating with heating elements situated in planes which are crosswise to the vertical axis of the body, immersed in the bottom layer of the reaction mixture and as close as possible above or below dispensing trays, whereby the device used for stirring and raising liquid to dispensing trays is an electrically driven mixing pump, situated close to the reactor bottom. In a favourable embodiment, the heating elements have the form of electric heaters in protective tubes, stabilized with CO₂ or other inert gas, whereby electric heaters are grouped in bundles and mounted separately in openings along the perimeter of the body and oriented centripetally. In a favourable embodiment, the body has the shape of a vessel closed with covers, an upper one and a lower one, whereby the lower cover, which forms the bottom, and the upper cover have, in a favourable embodiment, the shape of cones, convex on the outside. In a favourable embodiment, the mixing pump is located in a cylindrical vertical chute located centrally in the bottom layer of the reaction mixture. In a favourable embodiment, in the bottom section, there is a device for continuous discharging of worn-out catalyst and carbonization product, in a favourable embodiment in the form of a pump and a filter, in a favourable embodiment a ceramic filter, with oil recycling to thermocatalytic reactor. In a favourable embodiment, the reactor has sparge pipes, located inside the body and connected to electric heater pipes, which collect CO₂ or other inert gas from heaters and supply it to the reaction mixture bottom layer at the bottom of the reactor, producing the effect of bubbling and additional heating of the mixture. In a favourable embodiment, the reactor is equipped with a catalyst dispenser. In a favourable embodiment, the catalyst dispenser has a catalyst feeder.

The solution according to the invention is characterized by high process efficiency, enables about 90% of merchandise to be obtained compared to charge, which is a considerable increase compared to known methods. Electric heaters in the reactor, stabilised with carbon dioxide flow, make it possible to operate at a low temperature gradient and main heat resistance of heat exchange on the melted side of the raw material and depolymerization products. As a result, with simultaneous intense stirring, greater quantities of carbonization product are prevented and precise temperature control is enabled as a consequence of minimum thermal inertia of heating elements. Increased evaporation area in the reactor, obtained by separating the heated product into layers and independent heating of dispensing trays, as well as using the phenomenon of bubbling the reaction mixture with hot carbon dioxide enables volatile products to escape the reaction zone quickly and to come into contact with the catalyst at a given temperature and pressure, preventing unfavourable excess gas. A high performance straightway pump ensures quick homogenization of the reaction mixture with new portions of melted raw material supplied systematically and under small pressure from the melting crucible and prevent local temperature drops in the reactor where the melted raw material is fed. Using non-condensed postcondensation gases to drive the power generator considerably reduces the costs of operating the system.

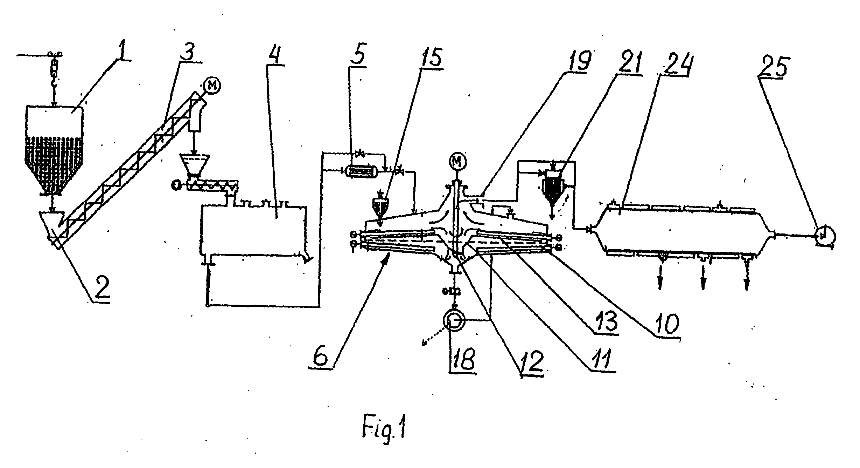

The solution as per the invention is explained in greater detail in examples and in the drawing in which Fig. 1 is a schematic diagram of the system for thermocatalytic depolymerization of waste plastics.

### Example I

The system for thermocatalytic depolymerization of waste plastics has a raw material storage silo 1 in which finely divided processed polyolefin plastic or polystyrene waste is placed, with a charging hopper 2 placed below, equipped with a screw conveyor 3, used to transport the plastic to the melting crucible 4, where it is heated to the temperature of 180°C and plasticized. Melting crucible 4 is connected to thermocatalytic reactor 6 via a pipeline, through heater 5. Thermocatalytic reactor 6 has the body in the shape of a cylindrical vessel, whose bottom and the upper cover have the shape of cones, convex on the outside. In reactor 6 there are electric heaters 10 in the form of heating elements in protective tubes, mounted in openings along the perimeter of the body. The temperature of electric heaters 10 is stabilized with carbon dioxide O₂ or other inert gas or metal oxides. The tubes with electric heaters inside are grouped in bundles of several pieces each and evenly distributed along the perimeter, centripetally. Electric heaters are mounted in the body separately, in openings along the perimeter of the body and are dismantled by taking the tubes out of the openings, which makes it possible to clean the tubes off the carbonization product sediment or to replace defective heaters. Bundles of electric heaters are placed at two levels, of which the lower level is near bottom, where heaters are completely immersed in the reaction mixture. The electric heaters of the upper level are located as close as possible to perforated metal dispensing trays 13 (above or below the trays) located crosswise with respect to the vertical axis of the reactor above the reaction mixture layer surface of the lower level. Inside the body, in its bottom part, there is a cylindrical vertical chute 11, with a mixing pump 12 at the bottom, e.g. an electrically driven positive-displacement propeller pump of high performance, approx. 100 m /h. The mixing pump 12 takes the melted reaction material from bottom 8 and transports it at the height above the upper level of electric heaters 10, to perforated dispensing trays of the second dispensing level. Dispensing trays 13 or dispensing troughs, not marked in the drawing, form the second dispensing level, where a thin layer of the reaction mixture evaporates quickly and is supplied on a regular basis with mixing pump 12, whereas any excess, additionally heated with upper heaters, flows through openings to the lower layer at the bottom of the vessel. This solution increases stirring intensity, maximizes heat exchange between heaters and the melted reaction material, intensities the contact of the melted raw material with the catalyst and increases evaporation area. All of the above considerably speeds up the reactions of the process in the thermocatalytic reactor. Inside the body of reactor 6, near its bottom, there are sparge pipes connected to electric heaters 10, which discharge carbon dioxide CO₂ or other inert gas from these heaters to the reaction mixture. Heated in heater tubes to the temperature of about 400°C, the gas penetrates the reaction mixture through openings in sparge pipes causing a bubbling effect and also additionally heats up the mixture. This supports stirring intensity, increases the evaporation area of the reaction mixture and speeds up heat distribution. At a start-up phase, hot carbon dioxide heats an empty device to operating temperature and during operation, enables the temperature of electric heaters to be controlled precisely. The reactor 6 is equipped with catalyst dispenser 15 located on the upper cover, supplying the catalyst to the melted material. The catalyst dispenser is equipped with a catalyst feeder. In the hollow of the reactor bottom there is a drain hole to which filter 18 is connected, enabling deactivated catalyst and carbonization product to be removed from the reaction mixture. In the upper cover there is an outlet pipe 19 for the vapours of the depolymerizate - gaseous products of depolymerization, connected, via a pipeline, to the pipe supplying depolymerizate vapours to the secondary depolymerization device 21 (or directly to the pipeline of the fraction condenser 24). The secondary depolymerization device 21 has the form of a vertical cylindrical pass-through tank, in which the catalyst in granulated form or in other porous form is placed. This device is used for the catalytic process of depolymerization of gaseous products obtained from preliminary depolymerization in reactor 6 of higher molecular weight, given mat in the depolymerizate vapours there are 20% to 30% hydrocarbons vapours whose chains are too long chain (paraffins). The connector pipe supplying gaseous products to the device 21 is situated in the upper part of the tank, where the catalyst feeder, which continuously supplies granulated catalyst, is also found. In the bottom part of the tank there is a connector pipe collecting gaseous depolymerizate products, connected to the pipeline of the fraction condenser 24, as well as a device discharging catalyst, which continuously discharges worn-out catalyst. This device makes it possible to control the time in which gaseous depolymerizate products are in contact with the catalyst by controlling the thickness of the catalyst layer. The secondary depolymerization device 21 is situated on the pipeline connecting the power generator with the fraction condenser 24. The fraction condenser 24 has the shape of a cuboid and is filled with pipes supplying the cooling liquid in a direction opposite to the direction of hot vapours depolymerization products surrounding the pipes. The condensate, which flows gravitation-wise, along the condenser pipes, accumulates at its bottom without further possibility of individual fractions mixing with one another and is discharged to separate tanks. The fraction condenser 24 is connected, via a pipe, to the power generator 25 in the form of a combustion engine driving the current generator. Flammable process gases, which normally do not condense (hydrocarbons with chain length of C₁ to C₄) extracted with a fan pump with a slight negative pressure, encounter a mist eliminator in the end part of the condenser and are further steered to the gas power generator and used to produce electric power needed to drive electric heaters and other system devices. The use of electric heaters in the reactor, stabilized with carbon dioxide, enables the device to operate at low temperature gradient and main heat resistance of heat exchange on the melted side of the raw material and depolymerization products. As a result, with simultaneous intense stirring, greater quantities of carbonization product are prevented and precise temperature control is enabled as a consequence of minimum thermal inertia of heating elements (there is no medium transporting heat at greater distances in the heating system). Increased evaporation area in the reactor, obtained by using heated dispensing trays and the phenomenon of bubbling the reaction mixture with hot carbon dioxide enables volatile products to escape the reaction zone quickly and to come into contact with the catalyst at a given temperature and pressure, preventing unfavourable excess gas.

### Example II

Finely divided polyolefin plastic is fed to the storage silo I from which it is farther fed to a charging hopper 2 and further on, passed via a screw conveyor 3 to the melting crucible 4. In the melting crucible the granulated product PE + PP is mixed with the paraffin fraction with the temperature of 280°C and then it melts and is heated to the temperature of 180°C with part of the heat of this fraction and regenerated heat supplied indirectly. Subsequently, melted raw material is discharged, via heater 5, to the thermocatalytic reactor 6. Vapours from the melting crucible are extracted via a fan, which is not marked in the drawing, and steered, along with the gaseous fraction, for combustion. In the thermocatalytic reactor 6 the raw material is heated with electric heaters to the temperature of 420°C, with aluminosilicate catalyst being fed at the same time, and mixed intensely using a high performance mixing pump 12. The catalyst is fed with dispenser to reactor 6 above the reaction mixture surface in the amount of 1.5% of its content in the reactor. The worn-out catalyst, along with the carbonization product, form production waste, which is extracted from the reactor with a gear pump to ceramic filter 18 with oil recycling to the reactor. The process of stirring and heating is additionally supported by bubbling with heated carbon dioxide CO₂, which stabilizes the temperature of electric heaters, and causes polyethylene and polypropylene carbon chain to break up, which is known as catalytic cracking. As a result, a mixture of hydrocarbons with carbon chain length from C₂ to C₃₄ is produced. Transformations that take place in the reactor gradually cause the catalyst to wear out. A worn-out catalyst, along with the carbonization product, is periodically extracted from the reactor in the from of an oil slurry through a bottom drain pipe, from where it is steered, via gear pump, to ceramic filer 18 with oil recycling to the reactor. Given the requirements concerning the composition of the cracking product, the process has two stages, i.e. first, in thermocatalytic reactor 6 on finely divided catalyst dispersed in the liquid phase of the reaction mixture with the temperature of 400°C, and second, in the secondary depolymerization device 21 tank, on a granulated catalyst bed, with a simultaneous flow of pre-cracked hydrocarbons with the temperature of 420°C. The granulated catalyst used in the catalytic cracking process in the vapour phase also undergoes gradual deactivation and is periodically extracted from the tank using extraction device and steered for regeneration. Shortages in the tank are replenished with fresh catalyst. Yapours and gases with the temperature 420°C. extracted from the secondary depolymerization tank, are steered to fraction condenser 24, where they are cooled in between pipes to 35°C with a simultaneous condensation of the paraffin fraction (420°C - 280°C) and gas oil (280°C - 180°C) as well as a petrol fraction (180°C - 35°C). Condensed fractions are steered to storage silos, whereby the paraffin fraction in the necessary quantity, is steered to the melting crucible 4, where it is mixed with the raw material. Flammable process gases from the fraction condenser 24, which normally do not condense (hydrocarbons with chain length from C₁ to C₄) are steered to a gas power generator and used to produce electric power needed for electric heaters and other system devices.

## Claims

1. A method of thermocatalytic depolymerization of waste plastics, in particular polyolefin plastics, to a mixture of unsaturated and saturated hydrocarbons, in which finely divided raw material is plasticized in a melting crucible, liquefied by heating and transformed catalytically in a thermocatalytic reactor in the presence of a catalyst, and reaction products in gaseous form are discharged to a fraction condenser, where they are cooled, condensed and separated into fractions of different boiling temperatures, **characterized in that** in the thermocatalytic reactor (6) the reaction mixture in liquid state is stirred and separated into at least two layers, situated at different levels, whereby each of these layers is heated up irrespective of the other, using heating elements principally oriented crosswise with respect to the vertical axis of the reactor, in a favourable embodiment in the form of electric heaters (10) placed in protective tubes grouped in bundles, in a favourable embodiment stabilized with inert gases or metal oxides.

2. The method according to claim 1, **characterized in that** the reaction mixture is stirred, separated and raised using a mixing pump (12), in a favourable embodiment a high performance propeller pump, whereby the mixture is fed into perforated dispensing trays (13) or dispensing troughs, located above the mixture bottom layer surface, crosswise with respect to the vertical axis of the reactor (6).

3. The method according to claim 1 or 2, **characterized in that** kinetic and thermal energy of the reaction mixture is supported by bubbling, using CO₂ or other inert gas, whereby, in a favourable embodiment, gas from the stabilizing circuit of electric heaters (10) is used.

4. The method according to claim 1 or 3, **characterized in that** products in gaseous form obtained from the catalytic reaction, before being fed into fraction condenser (24), are passed through a porous catalyst layer, in a favourable embodiment in the form of a granulated product, contained in a secondary depolymerization device (21).

5. The method according to claim 1 or 4, **characterized in that** non-condensed postcondensation gases from the fraction condenser (24) are being fed into a power generator (25) equipped with a combustion engine and a current generator, whereby, in a favourable embodiment, generated electric power is used to drive electric heaters (10) and other system devices.

6. The method according to claim 1 or 4, **characterized in that** the catalyst is supplied into the thermocatalytic reactor (6) in doses or continuously.

7. The method according to claim 4, **characterized in that** the catalyst is supplied into the tank of the secondary depolymerization device (21) in doses or continuously.

8. The method according to claim 1 or 6, **characterized in that** the catalyst worn out in the process, along with the carbonization product generated in the reactor (6), is discharged from the reactor into the filter (18), in a favourable embodiment a ceramic filter, with oil recycling to thermocatalytic reactor (6).

9. A system for thermocatalytic depolymerization of waste plastics, in particular polyolefin plastics, including a raw material storage silo and feeder, a melting crucible, a heater and a thermocatalytic reactor equipped with heating elements, connected to a fraction condenser, **characterized in that**:
- it has a secondary depolymerization device (21), in which gaseous products of a catalytic reaction collected from thermocatalytic reactor (6) are subject to depolymerization, whereby the device is connected to the reactor via a connector pipe supplying gaseous products and is connected to fraction condenser (24) via a connector pipe collecting gaseous products ,
- the secondary depolymerization device (21) has the form of a vertical pass-through tank filled with porous layer of the catalyst, in a favourable embodiment in the form of granulated product, and it is equipped with a catalyst feeder and a device discharging worn-out catalyst,
- the thermocatalytic reactor (6) has a device for separating liquid reaction material into layers situated one above the other in the form of a mixing pump (12), horizontal dispensing trays (13) or dispensing troughs located above the reaction mixture surface and heating elements (10) assigned to these layers.

10. The system according to claim 9, **characterized in that** the heating elements of thermocatalytic reactor (6) are electric heaters (10) placed in tubes, grouped in bundles and mounted separately in openings along the perimeter of the body, oriented centripetally and located at two levels, the lower level near the bottom of the reactor and the upper level, above or below perforated dispensing trays (13) or dispensing troughs located above the liquid reaction material surface, crosswise with respect to the vertical axis of the body.

11. The system according to claim 9 or 10, **characterized in that** the reactor (6) has sparge pipes installed, which discharge CO₂ or other inert gas from electric heaters (10) pipes to the reaction mixture.

12. The system according to claim 9 or 10 or 11, **characterized in that** the reactor (6) has catalyst dispenser (15) equipped with a feeder and, in the bottom section, a device for discharging worn-out catalyst, along with the carbonization product, with oil recycling to the reactor, whereby, in a favourable embodiment, the device has a gear pump and a ceramic filter (18).

13. The system according to claim 9 or 10 or 11 or 12, **characterized in that** fraction condenser (24) is connected, via a pipe discharging non-condensed postcondensation gases, to power generator (25) equipped with a combustion engine and a current generator.

14. A reactor for thermocatalytic depolymerization of waste plastics featuring a body in the form of a closed vessel, with thermal insulation, within which heating elements in the form of tubes and a mixer are mounted, **characterized in that** it has at least one upper level for dispensing the reaction mixture, located above the reaction mixture surface contained at the bottom of the body, which level has the form of perforated dispensing trays (13) or dispensing troughs located crosswise with respect to the vertical axis of the body, whereby the reaction mixture at each level has separate heating with heating elements (10) situated in planes which are crosswise to the vertical axis of the body , immersed in the bottom layer of the reaction mixture and as close as possible above or below dispensing trays (13), whereby the device used for stirring and raising the liquid to dispensing trays is an electrically driven mixing pump (12), situated to the reactor bottom.

15. The reactor according to claim 14, **characterized in that** the heating elements have close the form of electric heaters (10) in protective tubes, stabilized with CO₂ or other inert gas, whereby electric heaters are grouped in bundles and mounted separately in openings along the perimeter of the body and oriented centripetally.

16. The reactor according to claim 14, **characterized in that** the body has the shape of a vessel closed with covers, an upper one and a lower one, whereby the lower cover, which forms the bottom, and the upper cover have, in a favourable embodiment, the shape of cones, convex on the outside, whereby the mixing pump (12) is located in a cylindrical vertical chute (11) located centrally in the bottom layer of the reaction mixture.

17. The reactor according to claim 14, **characterized in that** it has, in the bottom section, a device for discharging worn-out catalyst and carbonization product, in a favourable embodiment in the form of a pump and a filter (18), in a favourable embodiment a ceramic filter, with oil recycling to the reactor (6).

18. The reactor according to claim 16 or 17, **characterized in that** it has sparge pipes, connected to electric heater (10) pipes, which discharge CO₂ or other inert gas from heaters to the reaction mixture bottom layer at the bottom of the reactor (6).

19. The reactor according to claim 16 or 17, **characterized in that** it is equipped with catalyst dispenser (15).

20. The reactor according to claim 19, **characterized in that** the catalyst dispenser (15) has a catalyst feeder.

## Patentansprüche

1. Das Verfahren der thermokatalytischen Depolymerisation von Kunststoffabfällen, insbesondere Polyolefinkunststoffabfällen, hin zur Form eines Gemisches von ungesättigten und gesättigten Kohlenwasserstoffen, bei dem der zerkleinerte Rohstoff im Schmelztiegel plastifiziert, durch Erwärmung in den flüssigen Zustand gebracht und in Anwesenheit eines Katalysators im thermokatalytischen Reaktor katalytisch umgewandelt wird und die gasförmigen Reaktionsprodukte zum Fraktionierkondensator abgeleitet werden, in dem es abgekühlt, verflüssigt und in Fraktionen mit verschiedenen Siedepunkten geteilt wird, **dadurch gekennzeichnet, dass** in dem thermokatalytischen Reaktor (6) das flüssige Reaktionsgemisch gerührt und mindestens in zwei Schichten separiert wird, die sich auf verschiedenen Niveaus befinden, wobei jede Schicht voneinander unabhängig mittels Heizelementen erhitzt wird, die prinzipiell quer zu der vertikalen Reaktorachse verlaufen, vorzugsweise in Form von Elektrotauchsiedern (10) in Rohrverkleidungen, die in Pakete verblockt und vorzugsweise mit Inertgasen oder Metalloxiden stabilisiert werden.

2. Das Verfahren nach Anspruch 1, **dadurch gekennzeichnet, dass** das Reaktionsgemisch mittels einer Rührpumpe (12) - vorzugsweise einer Hochleistungspropellerpumpe gerührt, verteilt und hochgehoben wird, wobei das Gemisch auf perforierte Überlaufplatten (13) bzw. Überlaufrinnen zugeführt wird, die sich oberhalb des Pegels der unteren Schicht des Gemisches, quer zur vertikalen Achse des Reaktors (6) befinden.

3. Das Verfahren nach Anspruch 1 oder 2, **dadurch gekennzeichnet, dass** die kinetische und die Wärmeenergie des Reaktionsgemisches durch Brodeln, mithilfe von CO₂ bzw. eines anderen Inertgases unterstützt wird, wobei vorzugsweise das aus dem stabilisierenden Kreislauf der Elektrotauchsieder (10) stammende Gas eingesetzt wird.

4. Das Verfahren nach Anspruch 1 oder 3, **dadurch gekennzeichnet, dass** die aus der katalytischen Reaktion erhaltenen gasförmigen Produkte vor der Zuführung zum Fraktionierkondensator (24) durch eine poröse Katalysatorschicht, vorzugsweise in Form des in der Vorrichtung zur sekundären Depolymerisation (21) enthaltenen Granulats, durchgelassen werden.

5. Das Verfahren nach Anspruch 1 oder 4, **dadurch gekennzeichnet, dass** die nicht verflüssigten Nachkondensationsgase aus dem Fraktionierkondensator (24) zum Stromerzeugungsaggregat (25) geleitet werden, das aus dem Verbrennungsmotor und dem Stromgenerator besteht, wobei der erzeugte Strom vorzugsweise für die Speisung der Elektrotauchsieder (10) oder anderer Vorrichtungen der Anlage verwendet wird.

6. Das Verfahren nach Anspruch 1 oder 4, **dadurch gekennzeichnet, dass** der Katalysator entweder in Dosen oder kontinuierlich zum thermokatalytischen Reaktor (6) zugeführt wird.

7. Das Verfahren nach Anspruch 4, **dadurch gekennzeichnet, dass** der Katalysator entweder in Dosen oder kontinuierlich zum Behälter der Vorrichtung zur sekundären Depolymerisation (21) zugeführt wird.

8. Das Verfahren nach Anspruch 1 oder 6, **dadurch gekennzeichnet, dass** der im Prozess verbrauchte Katalysator samt dem im Reaktor (6) entstandenen Karbonisat aus dem Reaktor auf das vorzugsweise keramische Filter (18) mit dem Öl-Rezyklus zum thermokatalytischen Reaktor (6) abgeleitet wird.

9. Die Anlage zur thermokatalytischen Depolymerisation von Kunststoffabfällen, insbesondere Polyolefinkunststoffabfällen, die aus dem Speicherbehälter und dem Rohstoffzubringer, dem Schmelztiegel, dem Erhitzer und dem thermokatalytischen Reaktor mit Heizelementen, der mit dem Fraktionierkondensator verbunden ist, besteht, **dadurch gekennzeichnet, dass**:
- sie über eine Vorrichtung zur sekundären Depolymerisation (21) verfügt, in der die Gasprodukte der katalytischen Reaktion aus dem thermokatalytischen Reaktor (6) in Anwesenheit des Katalysators depolytnerisiert werden, wobei diese Vorrichtung mittels eines die Gasprodukte zuführenden Stutzens mit dem Reaktor und mittels eines Stutzens für die Gasproduktabnahme mit dem Fraktionierkondensator (24) verbunden ist,
- die Vorrichtung zur sekundären Depolymerisation (21) die Form eines senkrechten Durchlaufbehälters aufweist, der mit einer porösen Katalysatorschicht, vorzugsweise in Granulatform, gefüllt ist, und mit einem Katalysatorzubringer und eine Ableitungsvorrichtung für den verbrauchten Katalysator ausgestattet ist,
- der thermokatalytische Reaktor (6) über eine Vorrichtung zum Separieren der flüssigen Reaktionsmasse in Schichten, die übereinander angeordnet sind, in Form einer Rührpumpe (12), der horizontalen Überlaufplatten (13) bzw. Überlaufrinnen oberhalb des Pegels des Reaktionsgemisches sowie über diesen Schichten zugeordnete Heizelemente (10) verfügt.

10. Die Anlage nach Anspruch 9, **dadurch gekennzeichnet, dass** die Heizelemente des thermokatalytischen Reaktors (6) die Elektrotauchsieder (10) bilden, die in Pakete verblockten Rohren gesetzt und in Öffnungen auf dem Gehäuseumfang (7) getrennt befestigt, zentripetal gerichtet und auf zwei Niveaus gelegen sind, unten in der Nähe des Reaktorbodens und oben oberhalb oder unterhalb der porösen Überlaufplatten (13) bzw. Überlaufrinnen, die sich über dem Pegel der flüssigen Reaktionsmasse, quer zu der senkrechten Gehäuseachse (7) befinden.

11. Die Anlage nach Anspruch 9 oder 10, **dadurch gekennzeichnet, dass** der Reaktor (6) über installierte Einblasrohre verfügt, die CO₂ oder ein anderes Inertgas aus den Rohren der Elektrotauchsieder (10) zum Reaktionsgemisch ableiten.

12. Die Anlage nach Anspruch 9 oder 10 oder 11, **dadurch gekennzeichnet, dass** der thermokatalytische Reaktor (6) über den Katalysatordosierer (15) mit einem Zubringer und im unteren Teil über eine Vorrichtung zur Ableitung des verbrauchten Katalysators samt dem Karbonisat mit einem Öl-Rezyklus zum Reaktor verfügt, wobei diese Vorrichtung vorzugsweise aus der Zahnradpumpe und dem keramischen Filter (18) besteht.

13. Die Anlage nach Anspruch 9 oder 10 oder 11 oder 12, **dadurch gekennzeichnet, dass** der Fraktionierkondensator (24) mit einer Rohrleitung, die die nicht verflüssigten Nachkondensationsgase abführt, und mit dem Stromgenerator (25) verbunden ist, der aus einem Verbrennungsmotor und einem Stromerzeugungsaggregat besteht.

14. Der Reaktor zur thermokatalytischen Depolymerisation von Kunststoffabfällen mit dem Gehäuse in Form eines thermoisolierten geschlossenen Gefäßes, innerhalb dessen Rohrheizelemente und eine Rührvorrichtung installiert sind, **dadurch gekennzeichnet, dass** er mindestens ein oberes Überlaufniveau für das Reaktionsgemisch besitzt, das sich über dem Pegel des Reaktionsgemisches auf dem Gehäuseboden (7) befindet, wobei dieses Überlaufniveau die Form von perforierten Überlaufplatten (13) bzw. Überlaufrinnen aufweist, die quer zu der senkrechten Gehäuseachse (7) verlaufen, wobei das Reaktionsgemisch auf jedem Niveau eine voneinander unabhängige Heizung mit Heizelementen (10) besitzt, die auf quer zur senkrechten Gehäuseachse (7) gelegenen Flächen angeordnet sind, in der unteren Schicht des Reaktionsgemisches eingetaucht sind und sich möglichst nahe oberhalb oder unterhalb der Überlaufplatten (13) befinden, wobei die Rühr- und Hebevorrichtung der Flüssigkeit auf die Überlaufplatten eine Rührpumpe (12) bildet, die mit einem Elektromotor angetrieben wird und in der Nähe des Reaktorbodens angeordnet ist.

15. Der Reaktor nach Anspruch 14 **dadurch gekennzeichnet, dass** die Heizelemente die Form der Elektrotauchsieder (10) in Rohrverkleidungen haben, die mit CO₂ oder einem anderen Inertgas stabilisiert werden, wobei die Elektrotauchsieder in Pakete verblockt, in Öffnungen auf dem Gehäuseumfang getrennt befestigt und zentripetal gerichtet sind.

16. Der Reaktor nach Anspruch 14 **dadurch gekennzeichnet, dass** das Gehäuse (7) die Form eines mit Ober- und Unterdeckel geschlossenen Gefäßes aufweist, wobei der den Boden bildende Unterdeckel und der Oberdeckel vorzugsweise die Form von nach außen konvexen Kegeln aufweisen, wobei die Rührpumpe (12) sich in einem zylindrischen und senkrechten Überlauftrichter (11) befindet, der zentral in der unteren Schicht des Reaktionsgemischs angeordnet ist.

17. Der Reaktor nach Anspruch 14, **dadurch gekennzeichnet, dass** er im unteren Teil über eine Vorrichtung zur kontinuierlichen Abführung des verbrauchten Katalysators und Karbonisats, vorzugsweise in Form einer Pumpe und eines vorzugsweise keramischen Filters (18) mit Öl-Rezyklus zum thermokatalytischen Reaktor (6) verfügt.

18. Der Reaktor nach Anspruch 16 oder 17, **dadurch gekennzeichnet, dass** er über Einblasrohre verfügt, die mit den Rohren der Elektrotauchsieder (10) verbunden sind und das CO₂ oder ein anderes Inertgas aus den Tauchsiedern zum Reaktionsgemisch der unteren Schicht am Reaktorboden ableiten,

19. Der Reaktor nach Anspruch 16 oder 17, **dadurch gekennzeichnet, dass** er mit dem Katalysatordosierer (15) ausgestattet ist.

20. Der Reaktor nach Anspruch 19, **dadurch gekennzeichnet, dass** der Katalysatordosierer (15) über den Katalysatorzubringer verfügt.

## Revendications

1. Le procédé de dépolymérisation thermocatalytique de matières plastiques usés, en particulier de la matière plastique polyoléfine, à un mélange d'hydrocarbures saturés et insaturés, dans lesquels la matière première finement désintégré est plastifié dans un vase de fusion, liquéfié suite au réchauffement et transformé catalytiquement en un réacteur thermocatalytique en présence d'produits catalyseur, et les produits de la réaction sous forme gazeuse sont déversés dans un condenseur de fraction, où ils sont refroidis, condensé et séparé en fractions à différentes températures d'ébullition, **caractérisé en ce que** dans le réacteur thermocatalytique (6) le mélange de réaction à l'état liquide est agité et séparé en au moins deux couches, situées à des niveaux différents, de sorte que chacune de ces couches est réchauffée indépendamment de l'autre, à l'aide des éléments de chauffage principalement orientée transversalement par rapport à l'axe vertical du réacteur, de préférence sous la forme des dispositifs de chauffage électriques (10) placés dans des tubes protecteurs groupés en faisceaux, de préférence stabilisé avec des gaz inertes ou des oxydes métalliques.

2. Le procédé selon la revendication 1, **caractérisé en ce que** le mélange de réaction est agité, séparés et soulevée à l'aide d'une pompe de mélange (12), de préférence une pompe à l'hélice de haute performance, dans lequel le mélange est introduit dans les plateaux de distribution perforé (13) ou des auges de distribution, située au-dessus de la surface de la couche inférieure du mélange, transversalement par rapport à l'axe vertical du réacteur (6).

3. Le procédé selon la revendication 1 ou 2, **caractérisé en ce que** l'énergie cinétique et thermique du mélange de réaction est supportée par barbotage, en utilisant du CO₂ ou d'un autre gaz inerte, de sorte que, dans un mode de réalisation préférentiel, le gaz du circuit de stabilisation de chauffage électriques (10) est utilisé.

4. Le procédé selon la revendication 1 ou 3, **caractérisé en ce que** des produits sous forme gazeuse obtenue par la réaction catalytique, avant d'être introduit dans un condenseur de fraction (24), sont passés à travers une couche de catalyseur poreux, dans un mode de réalisation préférentiel, sous la forme d'un produit granulé, contenue dans un dispositif de dépolymérisation secondaire (21).

5. Le procédé selon la revendication 1 ou 4, **caractérisé en ce que** non-condensés gaz de post-condensation du condenseur de fraction (24) sont introduits dans un générateur de puissance (25) équipé d'un moteur à combustion et un générateur de courant, grâce à quoi, dans un mode de réalisation préférentiel, l'énergie électrique générée est utilisée pour entraîner des dispositifs de chauffage électriques (10) et d'autres dispositifs de système.

6. Le procédé selon la revendication 1 ou 4, **caractérisé en ce que** le catalyseur est introduit dans le réacteur thermocatalytique (6) en doses ou en continu.

7. Le procédé selon la revendication 4, **caractérisé en ce que** le catalyseur est introduit dans le réservoir du dispositif de dépolymérisation secondaire (21) en doses ou en continu.

8. Le procédé selon la revendication 1 ou 6, **caractérisé en ce que** le catalyseur usé dans le processus, ainsi que le produit de carbonisation généré dans le réacteur (6), est évacué du réacteur dans le filtre (18), dans un mode de réalisation préférentiel un filtre céramique, avec l'huile de recyclage vers le réacteur thermocatalytique (6).

9. Le système de dépolymérisation thermocatalytique de matières plastiques usées, en particulier de la matière plastique polyoléfine, y compris la matière première de stocké dans le silo et dans l'alimenteur et, un vase de fusion, un dispositif de chauffage et un réacteur thermocatalytique équipé d'éléments chauffants, connectés à un condensateur de fraction, **caractérisé en ce que**:
- il comporte un dispositif de dépolymérisation secondaire (21), dans lequel les produits gazeux de la réaction catalytique recueillie du réacteur thermocatalytique (6) sont soumis à une dépolymérisation, et ans lequel le dispositif est relié au réacteur par l'intermédiaire d'un tuyau connecteur fournissant des produits gazeux et est reliée à un condenseur de fraction (24) par l'intermédiaire d'un tuyau connecteur collectant des produits gazeux,
- le dispositif de dépolymérisation secondaire (21) a la forme d'un réservoir de passage passe vertical remplie avec une couche poreuse du catalyseur, dans un mode de réalisation préférentiel sous la forme du produit granulé, et il est équipé d'un dispositif d'alimentation de catalyseur et un dispositif de décharge de catalyseur usé,
- le réacteur thermocatalytique (6) est équipé d'un dispositif pour séparer la matière de réaction liquide en couches situées l'une sur l'autre sous la forme d'une pompe de mélange (12), des plateaux de distribution horizontaux (13) ou des creux de distribution situées au-dessus de la surface du mélange de réaction et des éléments de chauffage (10) affectés à ces couches.

10. Le système selon la revendication 9, **caractérisé en ce que** les éléments chauffants de réacteur thermocatalytique (6) sont des dispositifs de chauffage électriques (10) placés dans des tubes, groupés en faisceaux et montés séparément dans des ouvertures le long du périmètre du corps (7), orienté de façon centripète et situé à deux niveaux, le niveau inférieur au près du fond du réacteur et le niveau supérieur, au-dessus ou au-dessous des plateaux de distribution perforés (13) ou les creux de distribution situées au-dessus la surface liquide du matériau de réaction, transversalement par rapport à l'axe vertical du corps (7).

11. Le système selon la revendication 9 ou 10, **caractérisé en ce que** le réacteur (6) est équipé des tuyaux de barbotage installés, qui décharge le CO₂ ou un autre gaz inerte des tuyaux du dispositif électriques de chauffage (10) au mélange de réaction.

12. Le système selon la revendication 9 ou 10 ou 11, **caractérisé en ce que** le réacteur (6) possède un distributeur de catalyseur (15) équipé d'un dispositif d'alimentation et, dans la section inférieure, un dispositif d'évacuation du catalyseur usé, du produit de carbonisation, de l'huile recyclé dans le réacteur, et en plus, dans un mode de réalisation préférentiel, le dispositif comporte une pompe à engrenages et un filtre en céramique (18).

13. Le système selon la revendication 9 ou 10 ou 11 ou 12, **caractérisé en ce que** le condenseur de fraction (24) est relié, par l'intermédiaire d'un tuyau de décharge des gaz non condensés de post-condensation, au générateur de puissance (25) équipé d'un moteur à combustion et un générateur de courant.

14. Le réacteur pour la dépolymérisation thermocatalytique de matières plastiques usées comportant un corps sous la forme d'un récipient fermé, avec isolation thermique, dans lequel les éléments chauffants en forme de tubes et un mélangeur sont montés, **caractérisé en ce qu'**il comporte au moins un niveau supérieur pour distribuer le mélange de réaction, située au-dessus de la surface mélange de réaction contient au fond du corps (7), dont le niveau a la forme de plateaux de distribution perforé (13) ou les creux de distribution situées transversalement par rapport à l'axe vertical du corps (7), grâce à quoi le mélange de réaction à chaque niveau a un chauffage séparé par des éléments chauffants (10) situées dans des plans qui sont diamétralement opposées à l'axe vertical du corps (7), immergée dans la couche inférieure du mélange de réaction et aussi près que possible au-dessus ou ci-dessous plateaux de distribution (13), grâce à quoi le dispositif utilisé pour l'agitation et l'enlèvement du liquide à plateaux de distribution est une pompe mélangeant entrainée électriquement (12), située au fond du réacteur.

15. Le réacteur selon la revendication 14, **caractérisé en ce que** les éléments chauffants ont une forme proche des dispositifs électriques de chauffage (10) dans des tubes de protection, stabilisée avec CO₂ ou un autre un gaz inerte, ce qui fait que les dispositifs électriques sont regroupés en faisceaux et montés séparément dans des ouvertures le long du périmètre du corps et orienté de façon centripète.

16. Le réacteur selon la revendication 14, **caractérisé en ce que** le corps (7) a la forme d'un récipient fermé avec les couvercles un supérieur et un inférieure, où le couvercle inférieur qui forme le fond, et le couvercle supérieur présentent, dans un mode de réalisation préférentiel, la forme de cônes, convexes sur le côté extérieur, où est localisé la pompe de mélange (12) et située dans une goulotte cylindrique verticale (11) situé centralement dans la couche inférieure du mélange de réaction.

17. Le réacteur selon la revendication 14, **caractérisé en ce qu'**il comporte, dans la section inférieure, un dispositif d'évacuation du catalyseur usé et du produit de carbonisation, dans un mode de réalisation préférentiel sous la forme d'une pompe et d'un filtre (18), préférentiellement d'un filtre céramique, recyclant l'huile dans le réacteur (6).

18. Le réacteur selon la revendication 16 ou 17, **caractérisé en ce qu'**il est équipés des tuyaux de barbotage, reliés au dispositif électrique de chauffage (10) qui décharge le CO₂ ou un autre gaz inerte des dispositifs de chauffage à la couche inférieure du mélange de réaction sur le fond du réacteur (6).

19. Le réacteur selon la revendication 16 ou 17, **caractérisé en ce qu'**il est équipé du distributeur de catalyseur (15).

20. Le réacteur selon la revendication 19, **caractérisé en ce que** le distributeur de catalyseur (15) est équipé d'une alimentation de catalyseur.
